# EUROPEAN PATENT SPECIFICATION

(11) **EP 3 221 511 B1**
(45) Date of publication and mention of the grant of the patent: **24.06.2020**
(21) Application number: 15860933.9
(22) Date of filing: 17.11.2015
(51) Int. Cl.: D21C 9/153, C08B 16/00, D01F 2/02, D21C 1/04, C08B 1/00, C08B 15/02, D01F 2/00, D21C 3/02, D21C 9/14, D21C 1/02

(54) **PROCESS FOR THE PRODUCTION OF A TREATED PULP, TREATED PULP, AND TEXTILE FIBRES PRODUCED FROM THE TREATED PULP**
VERFAHREN ZUR HERSTELLUNG EINES BEHANDELTEN ZELLSTOFFS, BEHANDELTER ZELLSTOFF UND AUS DEM BEHANDELTEN ZELLSTOFF HERGESTELLTE TEXTILFASERN
PROCÉDÉ DE PRODUCTION D'UNE PÂTE TRAITÉE, PÂTE TRAITÉE, ET FIBRES TEXTILES PRODUITES À PARTIR DE LA PÂTE TRAITÉE

(30) Priority: 21.11.2014 SE 1451409
(43) Date of publication of application: 27.09.2017
(73) Proprietor: Rise Innventia AB, 114 86 Stockholm (SE)
(72) Inventor: BERGNOR, Elisabeth, SE-112 21 Stockholm (SE); AXEGÅRD, Peter, SE-169 37 Solna (SE); LARSSON, Tomas, SE-181 36 Lidingö (SE); KARLSTRÖM, Katarina, 853 51 Sundsvall (SE)
(74) Representative: Zacco Sweden AB
(86) International application number: PCT/SE2015/051232
(87) International publication number: WO 2016/080895

(56) References cited:
- EP-A1- 0 442 806
- WO-A1-95/20065
- WO-A2-01/88236
- CA-A1- 2 144 677
- US-A- 5 211 811
- US-A1- 2002 155 292

## Description

### TECHNICAL FIELD

The present invention relates to a process for the production of treated pulp, treated pulp obtained by the process, textile fibres produced from the treated pulp, textile product comprising the textile fibres and use of the treated pulp for the production of regenerated cellulose.

### BACKGROUND ART

Pulp from fibre source materials can be treated in many ways to render the pulp desired properties. For example, pulp can be treated to obtain so called dissolving pulp which is a bleached wood pulp that has high cellulose content and a low concentration of other components, especially hemicellulose. Dissolving pulp can be used for the production of regenerated cellulose which in turn can be used to fabricate textile fibres.

Dissolving pulp has been traditionally produced chemically from a fibre source material by using a sulphite process or a kraft process. In the kraft process, white liquor, which is a water mixture of active chemicals hydrogen sulphide ions and hydroxide ions, is used to delignify the wood raw material into wood pulp which has high cellulose content and in which lignin is degraded and solubilized leading to a defibration of the wood fibres.

In order to provide high quality dissolving pulps from the kraft pulps and in order to render the pulp sufficient quality through bleaching steps, it has been known for a long time to use an acidic pre-treatment of the fibre source material before the alkaline pulping step. The acidic pre-treatment reduces the content of hemicellulose and especially xylan of the raw material and also reduces the process yield.

Pre-hydrolysis of the wood raw material has been commonly used as the acidic pre-treatment, and for example WO2012158075 discloses a known pre-hydrolysis process. The wood raw material can be for example treated with steam or water in liquid form at elevated temperatures during a prolonged time period, i.e. autohydrolysis or a dilute mineral acid can be added to the raw material. The cellulose is resistant to the acidic pre-hydrolysis conditions while hemicelluloses are degraded and can be removed in the subsequent pulping step, such as kraft cooking. The degraded hemicelluloses are transferred into the acidic pre-hydrolysate liquor and the degraded material may be used for energy production or it may be discarded as waste.

After the kraft cook, the obtained cellulose is forwarded to a bleaching process which can comprise for example an oxygen delignification step combined with a chlorine dioxide step. Ozone has also been mentioned as a suitable oxidant as disclosed e.g. by WO0188236 while said document teaches that pre-hydrolysis should be avoided to increase process yield.

After bleaching a treated pulp which is also called dissolving pulp or here, reactive cellulose, is provided. This can be further regenerated to produce textile fibres. Regenerated cellulose can be produced by dissolving the reactive cellulose in a solution which may contain e.g. sodium hydroxide and carbon disulphide or a metal salt. The dissolved pulp is then regenerated or coagulated in a solution which may contain for example sulphuric acid. The coagulated, regenerated cellulose can then be extruded and spun to textile fibres. However, in the dissolving step it has been desirable to avoid the use of carbon disulphide since it is an environmentally hazardous chemical. Therefore dissolving can alternatively be performed in more environmentally friendly solutions, such as alkaline metal salt solutions, e.g. sodium hydroxide including a zinc salt as disclosed e.g. by US 2289085.

However, low yield due to the low process yield after the pre-hydrolysis and kraft cooking and also low dissolving yield have been major problems in utilizing more environmentally friendly technologies than technologies involving the use of carbon disulphide to produce textile fibres.

Thus, there are several problems related to low yield in connection with the use of pre-hydrolysis. Also, it has been difficult to practically use other technologies than the ones using carbon disulphide to produce dissolving cellulose in textile fibre production.

### SUMMARY OF THE INVENTION

The subject-matter of the present invention is defined in claims 1-15 as attached. Thus, it is an object of the present invention to provide a process for the production of treated pulps which may increase the total process yield in the further processing of the treated pulp, such as in the production of regenerated cellulose while the use of environmentally friendly dissolving processes is enabled. It is also an object to provide high yield while high quality treated pulp can be produced.

It is a further object of the present invention to provide a process for the production of treated pulp with a bleaching sequence that results in a high quality treated pulp.

The objects above are attained by the method or process of the present invention in which a treated pulp is produced with a process comprising the steps of:
(i) providing a fibre source material;
(ii) subjecting the fibre source material to pre-hydrolysis;
(iii) subjecting the pre-hydrolysed fibre source material to alkaline chemical pulping process, preferably kraft pulping, to obtain an alkaline pulp;
(iv) optionally adjusting the pH of the obtained pulp to above pH 9; and
(v) subjecting the alkaline pulp to a bleaching sequence comprising contacting the pulp with ozone (Z) in alkaline conditions to obtain treated pulp.

The inventors of the present invention have also realised that the process gives pulp with significantly higher dissolving yield, when compared to a pulp of similar chemical composition and intrinsic viscosity that has not been subjected to the present process.

According to one embodiment, the process further comprises withdrawing pre-hydrolysate liquor after step ii). By pre-hydrolysate is meant liquor into which hemicelluloses have been transferred during the pre-hydrolysis. The pre-hydrolysate liquor can be used in many ways and advantageously it can be removed to a separate process for producing different products, such as barrier packaging material as described in EP 2067793/WO 2009068525 A1.

The bleaching sequence may comprise the step of contacting the pulp with oxygen (O) prior to contacting the pulp with ozone (Z) in alkaline conditions. By using the oxygen delignification, a more gentle way of reducing kappa number (residual lignin) in the pulp than with a prolonged cook can be achieved. By contacting with oxygen is meant contacting the pulp with oxygen, e.g. oxygen gas dissolved in alkaline solution. Since the pulp is alkaline, oxygen delignification is possible to perform.

The step of contacting the alkaline pulp with oxygen (O) can be performed in several steps, e.g. as a double step (OO) in two separate steps. Several steps further improve the delignification effect. The first oxygen step in the double step can be made shorter than the second step to further increase the gentleness of the process and so that minimal amount of cellulose is deteriorated in the delignification process.

The bleaching sequence may comprise a step of contacting the pulp with chlorine dioxide (D) after the step of contacting the pulp with ozone (Z) in alkaline conditions. Thus, further improved delignification and brightness and/or whiteness can be provided.

The step of contacting the alkaline pulp with chlorine dioxide (D) may also be performed in several steps, e.g. as a double step. In such a case the first chlorine dioxide step may be performed at a lower pH, e.g. about 2.5, than the second step, and thus the first step is delignifying. The second step can then be used to increase the brightness or the whiteness. By using low pH it is also possible to reduce the amount of inorganic salts in the pulp.

According to one embodiment, the bleaching sequence comprises a double step of contacting the pulp with oxygen (OO) prior to contacting the alkaline pulp with ozone (Z) in alkaline conditions, and a double step of contacting the alkaline pulp with chlorine dioxide (DD) after contacting the alkaline pulp with ozone (Z). Thus, the sequence is (OOZDD). By this sequence a surprisingly high total yield in the production of regenerated cellulose has been obtained.

It is essential in the present invention that the ozone bleaching step is performed in alkaline conditions. The pH of the pulp has to be over 9 and is preferably between pH 10-13 in step (iv), i.e. before the ozone bleaching step. The pH is adjusted if necessary. The pulp intrinsic viscosity of the obtained treated pulp after bleaching sequence in step (v) can be between 200-500 ml/g. Such pulp intrinsic viscosity enables dissolving of the pulp in environmentally friendly solutions, such as an aqueus solution of sodium hydroxide including a metal salt, when making a regenerated pulp. Preferably, the intrinsic viscosity of the obtained treated pulp after bleaching sequence in step (v) is between 250-450 ml/g. In this way it is possible to obtain a dissolving pulp suitable for dissolution and spinning to fibres.

The pulp intrinsic viscosity of the obtained alkaline pulp after cooking but prior to the bleaching step (v) can be between 600-1200 ml/g.

The fibre source material can be based on hardwood, softwood or non-wood. According to one embodiment, the fibre source material is softwood, whereby high quality treated pulp can be produced. Further, the pulp is preferably kraft pulp.

The pulp can be of any consistency, i.e. low, medium or high consistency and according to one embodiment the pulp is medium consistency (MC) pulp. Such pulps are particularly suitable for bleaching steps used in the present invention

In the present invention it is essential that the fibre source material, i.e. the raw material, is pre-hydrolysed. The present process may further comprise impregnating the pre-hydrolysed fibre source material with white liquor at a temperature which is about 20-70°C lower than the cooking temperature after step (ii) and prior to step (iii), e.g. about 120°C. In this way it is possible to obtain a more thorough impregnation of the cooking chemicals into the raw material, and thus a homogenous cook can be obtained. Further, it is possible to reduce a risk for lignin condensation which could deteriorate the whole cooking process.

The present process may also involve dissolving the obtained treated pulp, in an optional step (vi). Regenerated cellulose can then be produced from the dissolved treated pulp of the present invention. The dissolved treated pulp may have many advantageous characteristics. For example, the pulp consistency after dissolution can be from 3-10 %-by weight, and suitably e.g. 3.5-6.0 %-by weight, based on the total weight of the solution, and the dissolving yield can be over 90% and can be over 95%. The yield can maximally be about 97%.

The present invention also relates to a treated pulp obtained or obtainable by the process as explained above. The present invention also relates to textile fibres comprising the obtained treated pulp. Further, the present invention relates to a textile product, such textile fibres comprising the treated pulp.

According to further aspects of the invention it also relates to the use of the treated pulp as explained above for the production of regenerated cellulose. The regenerated cellulose can then be used to manufacture textile fibres, which in turn can be used to manufacture textile products.

Further objects, advantages and features of the invention are further explained in the following detailed description.

### BRIEF DESCRIPTION OF THE DRAWINGS

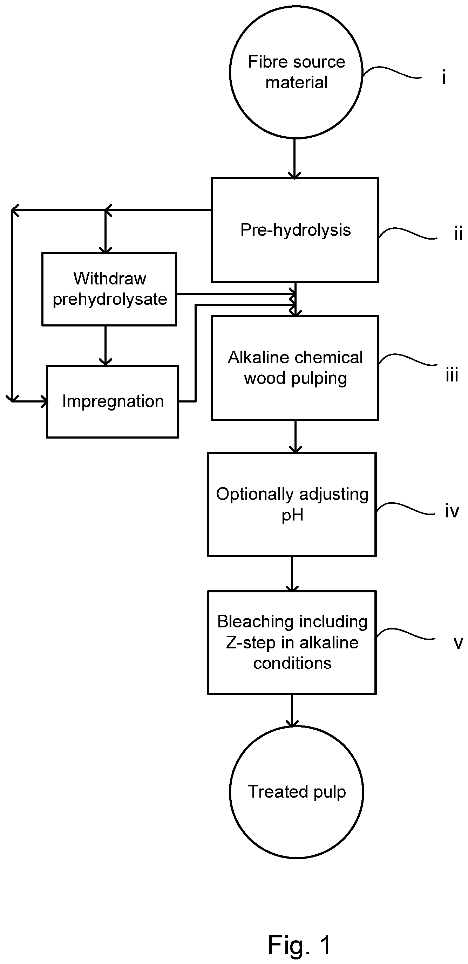

- Fig. 1: shows a flow chart of the process according to the present invention.

### DETAILED DESCRIPTION

Fig. 1 is a flow chart illustrating the main steps of the present process. Process steps are illustrated with corresponding text in squares and products and/or intermediate products are illustrated with text in circles. In step (i) a fibre source material is provided. In step (ii) the fibre source material is subjected to pre-hydrolysis. After the pre-hydrolysis, the obtained pre-hydrolysate liquor can optionally be withdrawn from the process, as shown by a square connected to the main steps of the process. The obtained pre-hydrolysate liquor is acidic if the pre-hydrolysis is performed in acidic conditions. Alternatively or additionally, the pre-hydrolysed fibre source material can be optionally subjected to a step of impregnation to impregnate cooking chemicals into the fibre source material, as also shown by a square connected to the main steps of the process and to the optional step of withdrawing pre-hydrolysate liquor. In step (iii) the pre-hydrolysed fibre source material is subjected for alkaline chemical wood pulping process, preferably kraft pulping, to obtain a pulp. In step (iv), which is optional, the pH of the obtained pulp is adjusted to above pH 9 if necessary. This can be performed e.g. by charging sodium hydroxide to the obtained pulp. Finally, the pulp is subjected to a bleaching sequence comprising contacting the pulp with ozone (Z) in alkaline conditions to obtain a treated pulp.

The treated pulp is also called in this context for dissolving pulp or reactive cellulose. Dissolving pulp is a bleached pulp that has high cellulose content, i.e. over at least 90 % of the dry content of the pulp and a low concentration of other components, especially hemicelluloses.

The fibre source material useable in this invention can be softwood, hardwood or non-wood, such as annual plants. The softwood tree species can be for example, but are not limited to: spruce, pine, fir, larch, cedar, and hemlock. Examples of hardwood species from which pulp useful as a starting material in the present invention can be derived include, but are not limited to: birch, oak, poplar, beech, eucalyptus, acacia, maple, alder, aspen, gum trees and gmelina. Preferably, the wood-based material mainly comprises softwood, and preferably consists of softwood, whereby a high yield with a good quality can be obtained in the alkaline chemical pulping process. The fibre source material may comprise a mixture of different softwoods, e.g. pine and spruce, with a mixing ratio varying between 1:10-10:1, for example 1:1. The fibre source material may also comprise a non-wood raw material, such as bamboo and bagasse. The fibre source material may also be a mixture of at least two of softwood, hardwood and/or non-wood. Suitably, before the use of the fibre source material in the process according to the present invention it is debarked, chipped into desired size and screened to remove pin chips, over-sized and over-thick chips.

Pre-hydrolysis according to the present invention can be performed by treating the fibre source material with water at an elevated temperature of about 120°C-180°C during at least 20 minutes, and the conditions during pre-hydrolysis are preferably acidic. During pre-hydrolysis up to 10-20 % of the fibre source (raw) material, mainly hemicellulose comprising xylan (in hardwood and annual plants) and glucomannan (in softwood) is solubilized. Since the hemicellulose is solubilized, a high quality pulp from the alkaline chemical wood pulping process, such as kraft pulping process, can be obtained.

The pre-hydrolysed fibre source material may be subjected to impregnating with white liquor at a temperature which is 20-70°C lower than the alkaline chemical wood pulping process temperature. For example, if the pulping process temperature is about 160°C, the impregnation with white liquor can be performed at 120°C during about 10 minutes to about 2 hours, preferably about 30 minutes. In this way it is possible to obtain a more homogenous impregnation of the cooking chemicals into the raw material, and thus a homogenous cook can be obtained. Further, it is possible to reduce a risk for lignin condensation which could deteriorate the whole cooking process.

The alkaline chemical wood pulping process may be kraft cooking/pulping process or soda pulping process. Preferably, the pulping process is kraft pulping process and especially a kraft pulping process using softwood fibre source material. In this way a high quality pulp can be obtained. By kraft pulping process, also called sulphate pulping process, is in this context meant a treatment of fibre source material with white liquor at a cooking temperature of from about 130-200°C to make lignin soluble in the cooking liquor. White liquor is a water mixture of sodium and/or potassium hydroxide and sodium and/or potassium sulphide. In the soda process the fibre source (raw) material is treated similarly, but the liquid for treatment comprises mainly sodium hydroxide and sodium carbonate (Na₂CO₃). These pulping technologies result in pulps having cellulose content of 90-95%, such as 92-94%.

The pulp obtained from the pulping process and which is subjected to bleaching may have a low consistency of 1-8% by total weight of the pulp and can be so called low consistency pulp having a dry material consistency of about 1 % to 4 % by total weight of the pulp. The pulp may also have a consistency of about 8-20% by total weight of the pulp and can be so called medium consistency pulp having a dry material consistency of about 8 % to 12 % by total weight of the pulp. Also, pulps having a consistency higher than 20%, e.g. high consistency pulps having a dry material consistency of about 20 % to 40% by total weight of the pulp, could be subjected to the bleaching steps. Preferably, the pulp is a medium consistency pulp having a dry material consistency of about 8 % to 12 %, by total weight of the pulp. In this way the processability of the pulp is convenient for the subsequent bleaching steps.

By bleaching is meant a chemical processing of pulp by means of a bleaching agent to increase the brightness and/or whiteness of the pulp. Bleaching also involves delignification of the pulp, i.e. removing essentially all of the residual lignin from the pulp. Bleaching agents that are generally used include oxidants such as oxygen (O), chlorine dioxide (D), ozone (Z), or any oxidant containing a peroxide group such as hydrogen peroxide (P, Pa, Px), or any combination thereof. Further bleaching agents generally used are chlorine (C), sodium hypochlorite (H), sodium hydroxide extraction (E, Eo, Ep, Eop), chelation agents to remove metals (Q), enzymes (X), peracetic acid (T, Paa) and sodium hydrosulphite (Y) or any combination thereof.

When using ozone (Z) as bleaching agent in the production of bleached pulps for paper grades, it has been generally considered important to have a low acidic pH, i.e. pH 2-3 and relatively low reaction temperatures, 30-50 °C, in order to minimize the pulp carbohydrates degradation. In addition, the dosage of ozone to the pulp in these acidic conditions has been low, normally below 5 kg per bone dry tonne (BDt). Ozone treatment at high (alkaline) pH, high ozone dosage and relatively high reaction temperatures as in the present invention is a new way to activate the cellulose in a controlled way.

In the present invention, the chemical bleaching processing is performed stepwise in a sequence, which may comprise one or several steps. For example, an oxygen step, i.e. a step in which the pulp is contacted with oxygen, is symbolized in the sequence with (O), a chlorine dioxide step, i.e. a step in which the pulp is contacted with chlorine dioxide, is symbolized in the sequence with (D), an ozone step i.e. a step in which the pulp is contacted with ozone, is symbolized in the sequence with (Z). According to the present invention, the bleaching sequence comprises at least an ozone treatment step which is performed in alkaline conditions. The alkaline conditions mean that the pH of the pulp is higher than pH 9, and preferably between pH 10-12. If needed, the pH is adjusted by adding sodium hydroxide to the pulp. The ozone treatment step can be performed in temperatures of from 10 °C to 90°C, and is preferably performed at a temperature within from about 40°C to about 90°C. Ozone is charged to the ozone treatment step as appropriate and required by the process. The quantities may vary, but are not limited to, for example of from about 5 kg/t₁₀₀ to about 20 kg/t₁₀₀, suitably 8-12 kg/t₁₀₀. The ozone consumption during the ozone treatment step is typically from about 0.1 kg/t₁₀₀ to about 15 kg/t₁₀₀, suitably 3-100 kg/t₁₀₀.

Preferably, the bleaching sequence comprises the step of contacting the alkaline pulp with oxygen (O) prior to contacting the alkaline pulp with ozone (Z). Further, the bleaching sequence preferably comprises a step of contacting the alkaline pulp with chlorine dioxide (D) after the step of contacting the alkaline pulp with ozone (Z). It has been surprisingly found that the ozone treatment in alkaline conditions can contribute to an increased total yield of dissolved pulp in the production of regenerated cellulose in cases when the fibre source material, i.e. the raw material has been pre-hydrolysed before pulping. Thus, even though there is a drop in the process yield due to the pre-hydrolysis step, the total yield in regeneration process is satisfactory and higher than obtained with traditional bleaching sequences, for example sequences comprising an ozone step under acidic conditions. Further, it has been surprisingly found that the alkaline ozone step contributes to obtaining a suitable pulp intrinsic viscosity of the pulp so that it can be dissolved in environmentally friendly dissolution baths, such as alkaline metal salt solutions, for example sodium hydroxide including a zinc oxide metal salt.

According to the present invention the bleaching sequence preferably comprises the step of contacting the alkaline pulp with oxygen (O) prior to contacting the pulp with ozone (Z) in alkaline conditions. In conventional processes Mg²⁺ is added to the pulp when oxygen step is performed. However, in the present process Mg²⁺ addition can be omitted, and in this way e.g. the pulp viscosity can be controlled. Further, the step of contacting the alkaline pulp with oxygen (O) can be performed as a double step (OO) in two or more separate steps. The alkaline ozone step (Z) can be performed in between the oxygen steps (OZO) or after the oxygen steps (OOZ), whereby a further improved dissolving yield can be obtained. The oxygen steps may be similar or have different duration. For example, the first oxygen step in the double step can be shorter than the second step, whereby the properties of the treated pulp can be further controlled.

The bleaching sequence may further comprise a step of contacting the pulp with chlorine dioxide (D) in one or more steps after the step of contacting the alkaline pulp with ozone (Z) to further increase delignification. The step of contacting the pulp with chlorine dioxide (D) can also be performed as a double step. According to one embodiment, the bleaching sequence comprises a double step of contacting the alkaline pulp with oxygen (OO) prior to contacting the alkaline pulp with ozone (Z), and a double step of contacting the alkaline pulp with chlorine dioxide (DD) after contacting the alkaline pulp with ozone (Z), i.e. a sequence (OOZDD). Further, the bleaching step may also include a chlorine dioxide step (D) followed by a sodium hydroxide extraction (E) step, hydrogen peroxide (P) step and oxygen step (O) followed by ozone step (Z) and a further chlorine dioxide step (D), i.e. (D(EPO)ZD). Further examples of possible bleaching sequences are (OO(EOP)ZDD) and (DZD), in which the pH of the pulp can be adjusted to above at least 9 before the ozone step.

The pH of the semi-bleached pulp after (OOZ) is alkaline, and preferably between pH 10-11.5.The final bleaching steps with chlorine dioxide (D) are acidic - neutral, suitably in the range of about pH 2.5 to pH 6.0 and are essentially brightening enhancing steps. It should be noted that the bleaching steps both prior to ozone step and after the ozone step may be acidic as long as the ozone step is performed in alkaline conditions. By the present process a high dissolving pulp yield can be obtained with satisfactory brightness/whiteness of the final product. The cellulose content of the bleached pulp is high and can be e.g. about 94-97%.

The treated pulp of the present invention can thus be used for the production of regenerated cellulose. Basically in the regenerated cellulose process the treated pulp is dissolved in a dissolving bath, then coagulated or regenerated and the resulting viscous liquid can be extruded through spinnerets and further processed to man-made fibres. The dissolving baths may be e.g. sodium hydroxide and carbon disulphide or a metal salt. Methods to regenerate or coagulate the dissolved pulp are known in the art and can involve acidic or alkaline baths. The treated pulp of the present invention is suitable for use in any regeneration method, and is also suitable for use in environmentally friendly processes. Especially, the pulp intrinsic viscosity and quality of the pulp make it suitable for dissolving baths including for example sodium hydroxide and a metal salt instead of carbon disulphide. The intrinsic viscosity of the pulp, according to standard ISO 5351:2010, before bleaching steps can be for example between 600-1200 ml/g, and is preferably between 800-1000 ml/g. After the bleaching sequence, the pulp intrinsic viscosity can be from 200 to 500 ml/g, and preferably 250-450 ml/g, whereby the pulp is still easy to dissolve while sufficient quality for spinning is provided.

By the present process, pulp consistencies (after dissolving) of from 3-10 % by weight of the pulp, and suitably e.g. 3.5 to 6.0 % by weight of the pulp can be obtained. The dissolving yields obtained are more than 90% and can be over 95%, which is unexpected. Thereby, it has been shown to be economic to produce textile fibres from the treated pulp obtained or obtainable by the present process, even when there is a yield drop after pre-hydrolysis. Textile products, such as articles of clothing, i.e. clothes or pieces that cover e.g. furniture, can therefore be produced more environmentally friendly and still in an economic way. Thus, the treated pulp of the present invention can be used in many ways.

The invention is further illustrated below by means of the following examples, which do not limit the invention in any respect. The invention may be varied within the scope of the appended claims.

### EXAMPLES

### Fibre source material

Softwood, Scots pine (*Pinus sylvestris*) and Norway spruce (*Picea abies*), were chipped and screened separately. Accept fractions 2-8 mm thick were air-dried and hand sorted to remove chips with bark and knots. Raw materials were characterized separately and for each cook 50% of each raw material was charged to the digester. Chemical composition of softwood, spruce and pine used for pre-hydrolysis kraft cooking producing pulps for ozone treatment are shown in Table 1. By w% on wood is meant weight % in respect of the total weight of the analysed wood.

**Table 1.**

| | Unit | Pine | Spruce | Spruce/Pine |
|---|---|---|---|---|
| Acid-insoluble lignin | w% on wood | 27.8 | 28.2 | 28.0 |
| Acid-soluble lignin | w% on wood | 0.5 | 0.6 | 0.6 |
| Extractives* | w% on wood | 1.9 | 1.1 | 1.5 |
| Ash content | w% on wood | 0.2 | 0.3 | 0.3 |
| Xylan | % on wood | 9.1 | 7.8 | 8.4 |
| Glucomannan | % on wood | 18.3 | 18.1 | 18.2 |
| Cellulose | % on wood | 42.2 | 44.0 | 43.1 |

### Pre-hydrolysis kraft cooking

Pre-hydrolysis kraft cooking, i.e. pre-hydrolysis before kraft cooking, was performed in a forced circulation digester, in which 2.0 kg of air dried chips were charged. Water impregnation was employed prior to pre-hydrolysis and kraft cooking. The digester was of 20 L (litre) volume and used to simulate "compact cooking" with ease to perform liquor additions and withdrawals during hydrolysis temperatures, i.e. at 160-170 °C. In the following pre-hydrolysis kraft cooking 2.0 kg dry-weight chips were charged. Synthetic white-liquor (WL) was prepared from technical grade purity NaOH and Na₂S whereas Na₂CO₃ of analytical (p.a.) grade was used. In all steps deionized water was used.

### Pre-hydrolysis and water impregnation

Wood chips were subjected to water impregnation over-night after 30 minutes evacuation and addition of deionized water at liquor-to-wood ratio (l:w) 6:1 and 0.5 MPa of applied N₂-pressure. The following day, free water was drained of to approximately l:w 2:1.

Pre-hydrolysis was conducted at l:w 6:1 after addition of fresh deionised water. Time to reach pre-hydrolysis temperature was approximately 20 minutes and pre-hydrolysis time at 165 °C was 60 minutes. The specific temperatures, times and ratios are specified in Table 2. Also, in general table 3 below the specific durations for each temperature are further specified.

**Table 2.**

| Pre-hydrolysis | Temperature, T | Time at T | Total time | L:W ratio |
|---|---|---|---|---|
| Pulp identity | °C | min | Min | l/kg |
| Pulp 1 | 165 | 60 | 80 | 6 |
| Pulp 2 | 165 | 60 | 90 | 6 |

**Table 3.**

| Pre-hydrolysis with deionized water | Time, min |
|---|---|
| Temp. increase from 25°C to 165°C | 20-30 |
| Time at pre-hydrolysis temperature 165°C | 60 |
| Total time for pre-hydrolysis | 80-90 |

The resulting pre-hydrolysates had pH 3.6 (pulp 1) after the total time of 80 min and pH 3.3 (pulp 2) after the total time of 90 min. The corresponding dry contents were 2.1% (pulp 1) and 2.4% (pulp 2), respectively, indicating a more severe pre-hydrolysis after 90 minutes lowering the pH and extraction more wood component into the pre-hydrolysate.

### Kraft cook

After withdrawal of the pre-hydrolysate, white liquor was charged into the digester. Impregnation of pre-hydrolysed chips with white liquor was performed at 120°C for 30 minutes before reaching a cooking temperature of 162°C. The cook was done with 5:1 liquor-to-wood ratio and the alkali charge was 230 g alkali/kg wood and terminated when 1700 H-factor was reached. By adding Na₂CO₃ to the white liquor, the carbonate concentration 0.10 mol/L was maintained to resemble industrial white liquor. Table 4 below shows the specific conditions of the kraft cook after pre-hydrolysis, and Table 5 below shows the cooking conditions in more detail.

**Table 4.**

| Kraft cooking | Temperature, T | H-factor | L:W ratio | Alkali charge | Sulfidity |
|---|---|---|---|---|---|
| Treatment date | °C | | l/kg | g/kg | % |
| Pulp 1 | 162 | 1700 | 5 | 230 | 40 |
| Pulp 2 | 165 | 1540 | 6 | 260 | 35 |

**Table 5.**

| Kraft delignification after withdrawal of hydrolysate | | | Time, min |
|---|---|---|---|
| Temperature increase, none | | | 0 |
| Impregnation at received temp. after charging white liquor, ^{∼}120°C | | | 30 |
| Temp. increase to cook zone: 5°/min from ^{∼}120 to cooking temperature | | | 7-9 |
| Time at cooking temp.: | | 162 °C | 213 |
| | | 165 °C | 141 |
| Total time (min) to reach H-factor | Pulp 1 | 1700 H-factor | 252 |
| | Pulp 2 | 1540 H-factor | 185 |

### Washing and screening

The delignified chips were washed with deionised water for 10-12 hours. The washed delignified chips were first screened in a water-jet defibrator with 2 mm perforations followed by screening over a Wennberg screen with 0.2 mm slots. The reject was dried and weighed. After screening, the pulps were dewatered to 25-30% consistency in a centrifuge and granulated. The unbleached screened yield and screen reject were determined gravimetrically.

### Oxygen delignification

Pulps were oxygen delignified in one step (O), or in two consecutive steps (OO) with wash in between the steps, prior to ozone (Z)-treatment. The oxygen delignification was carried out in 2.5 L autoclaves with teflonized linings, in a heated glycol batch. Conditions were exaggerated compared to the ones normally used for paper-grade pulp. The conditions are based on research aiming at stabilising the negative cellulose reactions for paper-grade pulp. The main alterations are; no addition of Mg²⁺, higher end-pH than recommended for paper-grade pulp, meaning above pH 11.5 and higher temperature. Also, in some cases, two-step oxygen delignification was employed with a shorter first step and a second addition of alkali after one-passing through of warm deionised water. Table 6 below shows details for tested bleaching sequences oxygen delignification (O), prior to Z-bleaching (O1), after Z-bleaching (O2). In case of acid Z treatment, the sequence was ODDZ, meaning O1 was applied prior to DD-bleaching.

**Table 6.**

| Treatment code | NaOH charge | Time | Temp. | O₂-charge Initial pressure | Pulp consistency, Cm |
|---|---|---|---|---|---|
| O | weight-%, based on the dry pulp | min | °C | MPa | % |
| O1 before Z | 5.0 | 120 | 120 | 0.7 | 12 |
| O2 after Z | 3.0 | 90 | 120 | 0.7 | 12 |

Table 7 below shows details for a two-step oxygen delignification (OO), with washing in-between the O-steps using 25 ml/g pulp of warm, 60 °C, deionized water and before Z-bleaching.

**Table 7.**

| Treatment code | NaOH charge | Time | Temp. | O₂-charge Initial pressure | Pulp consistency, Cₘ |
|---|---|---|---|---|---|
| OO | weight-%, based on the dry pulp | min | °C | MPa | % |
| Step 1 | 5.0 | 60 | 120 | 0.7 | 12 |
| Step 2 | 3.0 | 90 | 120 | 0.7 | 12 |

### Bleaching including activation with Z

In a series of experiments the new alkaline ozone treatment was applied in between the two-step alkaline oxygen delignification, OZO, or after the two-step oxygen delignification, (OO)Z. All ozone treated pulps were finally bleached with two following chlorine dioxide steps (DD). In addition, a traditional ozone step at acidic pH was included as a comparative example and applied as a final bleaching step after the chlorine dioxide bleaching (ODDZ). In a first series of treatments, small scale trials in 20 g (bone dry/trial) scale (pulp 1) were treated with ozone according to table 9.

The ozone bleaching was carried out in a stirred reactor at 10 % pulp consistency (MC) and at the highest possible temperature in the reactor used, i.e. 50 °C, see Table 8. In examples 1, 2, 4 and 5 (Ex. 1, Ex. 2, Ex. 4, Ex. 5) according to the present invention, pulp 1 was treated in an alkaline ozone step. In comparative example 3 (Ex. 3), pulp 1 was treated in an acidic ozone step.

The most promising treatment sequence and charges were repeated in 200 g scale in 3 batches. In example 6 (Ex. 6), a second pulp was prepared, Pulp 2 for the trial. The NaOH (or H₂SO₄ for the acidic conditions in comparative example 3) was mixed with deionized water before addition to the pulp. The ozone charge was controlled by the ozone concentration in the oxygen/ozone gas and the rate of the gas flow. After the treatment, the final pH was determined. The pulp was well-washed with de-ionized water before the chlorine dioxide bleaching. Table 8 below shows the conditions in the ozone step (Z) treatments both in alkaline (Ex 1,2,4,5) conditions and acidic conditions (Ex. 3) in 20 od (oven dry) g scale and pulp in Ex 6, (OO)Z at alkaline conditions in 200 g batches for production of total amount of 600 g ozone treated pulp.

**Table 8.**

| | Ozone kg/t₁₀₀ | | NaOH charge kg/t₁₀₀ | H₂SO₄ charge kg/t₁₀₀ | Temp. °C | Pulp consistency % | pH (initial) | pH (final) |
|---|---|---|---|---|---|---|---|---|
| | Charge | Consumption | | | | | | |
| Ex 1. OZODD (pulp 1) | 9.7 | 6.0 | 5.3 | 0 | 50 | 10 | 11.5 | 10.0 |
| Ex 2. OZODD (pulp 1) | 10.2 | 7.9 | 11.5 | 0 | 50 | 10 | 11.8 | 10.8 |
| Ex 4. (OO)Z DD (pulp 1) | 10.3 | 4.9 | 11.9 | 0 | 50 | 10 | 11.9 | 11.5 |
| Ex 5. (OO)Z DD (pulp1) | 10.0 | 6.6 | 11.5 | 0 | 50 | 10 | 11.8 | 11.4 |
| Ex 6. (OO)ZDD (pulp 2) | 9.8 | 9.0 | 12.5 | 0 | 50 | 10 | 11.5 | 10.5 |
| Ex 3. ODDZ (pulp 1) | 10.2 | 2.0 | 0 | 3.6 | 50 | 10 | 2.3 | 2.2 |

The chlorine dioxide bleaching was carried out in two steps in plastic bags at 10 % pulp consistency (MC) with washing in-between. The bleaching conditions are shown in Table 9. The NaOH, when needed to adjust the pH, was mixed with deionized water before addition to the pulp, followed by chlorine dioxide addition to the pulp suspension and thoroughly mixed. After the treatment, the final pH was determined. The pulp was finally well-washed with de-ionized water. Bleaching conditions in the DD steps that are designated as D1 and D2 are shown below in Table 9. Chlorine dioxide charges are given in kg chlorine dioxide and not in kg active chlorine.

**Table 9.**

| | Chlorine dioxide charge | | NaOH charge | | Temp. | | Time | | Pulp consistency % | pH (final) | |
|---|---|---|---|---|---|---|---|---|---|---|---|
| | kg ClO₂/t₁₀₀ | | kg/t₁₀₀ | | °C | | min | | | | |
| | D1 | D2 | D1 | D2 | D1 | D2 | D1 | D2 | DD | D1 | D2 |
| Ex 1. OZODD (pulp1) | 6.5 | 2.7 | 0 | 1.4 | 90 | 80 | 120 | 240 | 10 | 2.6 +/-0.4 | 4 +/-0.4 |
| Ex 2. OZODD (pulp 1) | 6.5 | 2.7 | 0 | 1.4 | 90 | 80 | 120 | 240 | 10 | 2.6 +/-0.4 | 4 +/-0.4 |
| Ex 4. (OO)ZDD (pulp 1) | 6.5 | 2.7 | 0 | 1.4 | 90 | 80 | 120 | 240 | 10 | 2.6 +/-0.4 | 4 +/-0.4 |
| Ex 5. (OO)ZDD (pulp 1) | 6.5 | 2.7 | 0 | 1.4 | 90 | 80 | 120 | 240 | 10 | 2.6 +/-0.4 | 4 +/-0.4 |
| Ex 6. (OO)ZDD (pulp 2) | 7.4 | 2.7 | 0 | 1.2 | 90 | 80 | 120 | 240 | 10 | 2.6 +/-0.4 | 4 +/-0.4 |
| Ex 3. ODDZ (pulp 1) | 6.5 | 2.7 | 0 | 1.3 | 90 | 80 | 120 | 240 | 10 | 4.2 +/-0.4 | 4.2 +/-0.4 |

Table 10 below shows the chemical composition of the pulp after bleaching steps.

**Table 10.**

| | Cellulose w% | Xylan w% | GGM w% | Acid-insoluble Lignin w% | Acid-soluble Lignin w% | Extractives w% |
|---|---|---|---|---|---|---|
| Pulp 1 | 93.0 | 2.7 | 1.9 | 1.7 | 0.5 | 0.2 |
| Pulp 2 | 93.5 | 2.4 | 1.4 | 2.0 | 0.5 | 0.3 |
| Ex. 2 OZODD (Pulp 1) | 95.8 | 2.6 | 1.6 | n.a | n.a | n.d |
| Ex. 4 (OO)ZDD (Pulp 1) | 95.6 | 2.6 | 1.8 | n.a | n.a | n.d |
| Ex. 6 (OO)ZDD (Pulp 2) | 96.3 | 2.3 | 1.3 | n.a | n.a | n.d |
| Ex. 3 ODDZ (Pulp 1) | 95.5 | 2.7 | 1.8 | n.a | n.a | n.d |

| | | | | | | |
|---|---|---|---|---|---|---|
| GGM = Galactoglucomannan Ash-content in bleached pulps ≤0.1% n.a. = not applicable n.d. = not determined | | | | | | |

### Regenerated cellulose

To produce regenerated cellulose, the produced ozone bleached never-dried pulps were evaluated for their dissolution ability in a standardized manner. The never-dried pulps treated with a water mixture of NaOH and ZnO according to the described procedure below and the obtained solution was centrifuged after which the amount of obtained undissolved material (size of pellet) was estimated. The treatments involved: swelling, dissolution and dissolving yield determination.

The cellulosic pulp of dry content of 20-25% was placed in a beaker with 5% NaOH-solution during a couple of minutes for swelling to occur at room temperature. The mixture was transferred to a vessel with baffles. NaOH 8% and ZnO 0.8% was added and the dissolution was started by vigorous stirring with a propeller during 1 hour. The temperature in the mixture was kept between -8 °C and 4 °C by having cold reaction vessels and solutions. The sample was centrifuged and the amount of undissolved matter was estimated. The solubility of the dissolved cellulose was shown by ¹³C-NMR. The results have been shown in Table 11 below, in which pulp intrinsic viscosity according to ISO 5351:2010 and dissolving yield after dissolution in NaOH and ZnO solution at 3-4% pulp consistency after final bleaching are shown.

**Table 11.**

| | Intrinsic viscosity, ISO 5351:2010 ml/g | | | Pulp consistency % | Dissolving yield % |
|---|---|---|---|---|---|
| | After cook | Before Z | After final bleaching step | Dissolving step (NaOH + ZnO) | |
| Ex 1. OZODD (pulp 1) | 980 | 500 | 280 | 4.0 | > 90 |
| Ex 2. OZODD (pulp 1) | 980 | 500 | 310 | 3.8 | > 90 |
| Ex 4. (OO)ZDD (pulp 1) | 980 | 490 | 430 | 3.8 | > 95 |
| Ex 5. (OO)ZDD (pulp 1) | 980 | 490 | 420 | 4.0 | > 95 |
| Ex 6. (OO)ZDD (pulp 2) | 820 | 430 | 340 | 4.0 | > 95 |
| Ex 3. ODDZ (pulp 1) | 980 | 470 | 390 | 3.8 | < 50 |

### Results

The undissolved matter in the examples 1, 2, 4-6 according to the present invention was in the best case less than 5% and the dissolved cellulose was characterized and identified by using ¹³C-NMR. The cellulose concentration was between 3% and 4% in the solutions. The dissolved cellulose was possible to regenerate and cellulose filaments could be prepared. In table 10 the different pulps are compared. The pulp treated with an acidic ozone step after chlorine dioxide bleaching was hard to dissolve; yielding less than 50% dissolved matter. Thus, the treated pulp according to the present invention results in a higher total yield than the prior art pulps while dissolution in environmentally friendly sodium hydroxide-zinc salt solution is possible.

### Characterisation of wood and pulps

The following methods were used to characterize the wood and pulps.

Chemical analysis of wood chips and pulp was preceded by grinding. The acetone extracted wood (SCAN-CM 49:03) was subjected to acid hydrolysis and carbohydrates were quantified with ion-chromatography with IC-PAD according to SCAN-CM 71, acid-insoluble lignin was determined gravimetrically according to TAPPI T222 om-00, acid-soluble lignin by UV-spectrophotometry at 205 nm using absorptivity coefficient 110 l/g, cm. Ash-content (ISO 1762) and metal contents were (ICP) were determined on separate samples. The chemical composition is presented in table 1.

### Analytical methods

### Wood and pulp analyses

| | |
|---|---|
| Wood dry content | SCAN-CM 39:94 |
| Pulp dry content | ISO 638 / EN 20638 |
| Kappa number | ISO 302:2004 |
| Intrinsic viscosity | ISO 5351:2010 |
| Carbohydrate composition | SCAN CM 71:09 |
| Acid-insoluble lignin (Klason) | SCAN CM 71:09 / TAPPI T 222 om-00 |
| Acid-soluble lignin | TAPPI UM 250 |
| Extractives (wood) | SCAN-CM 49:03 |
| Ash-content | ISO 1762 |

The present description of the embodiments of the invention is provided with the object of illustrating and describing the invention. The embodiments and examples are not intended to be exhaustive or limit the invention as it is limited by the scope of the attached claims.

## Claims

1. Process for the production of treated pulp comprising the steps of:
i. providing a fibre source material;
ii. subjecting the fibre source material to pre-hydrolysis;
iii. subjecting the pre-hydrolysed fibre source material to alkaline chemical pulping process, preferably kraft pulping, to obtain an alkaline pulp;
iv. optionally adjusting the pH of the obtained pulp to above pH 9;
v. subjecting the alkaline pulp having a pH over 9 to a bleaching sequence comprising contacting the pulp with ozone (Z) in alkaline conditions to obtain a treated pulp.

2. Process according to claim 1, wherein the process further comprises a step of withdrawing pre-hydrolysate liquor after step ii).

3. Process according to claim 1 or 2, wherein the bleaching sequence comprises the step of contacting the alkaline pulp with oxygen (O) prior to contacting the alkaline pulp with ozone (Z) in alkaline conditions.

4. Process according to any one of the preceding claims, wherein the bleaching sequence comprises a step of contacting the pulp with chlorine dioxide (D) after the step of contacting the pulp with ozone (Z) in alkaline conditions.

5. Process according to any of the preceding claims, wherein the bleaching sequence comprises a double step of contacting the alkaline pulp with oxygen (OO) prior to contacting the pulp with ozone (Z), and a double step of contacting the pulp with chlorine dioxide (DD) after contacting the alkaline pulp with ozone (Z).

6. Process according to any of the preceding claims, wherein the pH of the obtained pulp is adjusted to between pH 10-13 in step (iv).

7. Process according to any of the preceding claims, wherein the pulp intrinsic viscosity of the obtained pulp prior to step (v) is between 600-1200 ml/g.

8. Process according to any of the preceding claims, wherein the pulp intrinsic viscosity of the obtained treated pulp after bleaching sequence in step (v) is between 200-500 ml/g, preferably between 250-450 ml/g.

9. Process according to any of the preceding claims, wherein the process comprises impregnating the pre-hydrolysed fibre source material with white liquor at a temperature which is 20-70°C lower than the cooking temperature after step (ii) and prior to step (iii).

10. Process according to any one of the preceding claims, wherein the process further comprises a step of:
vi. dissolving the obtained treated pulp from step (v).

11. Process according to claim 10, wherein the pulp consistency after the dissolution is from 3.5-6.0 %-by weight, based on the total weight of the solution.

12. Treated pulp obtained by the process according to any one of claims 1-11.

13. Textile fibres produced from the treated pulp according to claim 12.

14. Textile product comprising textile fibres according to claim 13.

15. Use of the treated pulp according to claim 12 for the production of regenerated cellulose.

## Patentansprüche

1. Verfahren zur Herstellung behandelten Zellstoffs, umfassend die folgenden Schritte:
i. Bereitstellen eines Faserquellenmaterials;
ii. Unterwerfen des Faserquellenmaterials einer Vorhydrolyse;
iii. Unterwerfen des vorhydrolysierten Faserquellenmaterials eines alkalischen chemischen Aufschlussverfahrens, vorzugsweise Kraft-Aufschluss, zum Erhalten eines alkalischen Zellstoffs;
iv. wahlweises Einstellen des pH-Werts auf einen pH-Wert über 9;
v. Unterwerfen des alkalischen Zellstoffs mit einem pH-Wert über 9 einer Bleichsequenz umfassend das Inkontaktbringen des Zellstoffs mit Ozon (Z) unter alkalischen Bedingungen zum Erhalten eines behandelten Zellstoffs.

2. Verfahren nach Anspruch 1, wobei das Verfahren weiter einen Schritt des Zurückziehens von Vorhydrolysat-Lauge nach dem Schritt ii) umfasst.

3. Verfahren nach Anspruch 1 oder 2, wobei die Bleichsequenz den Schritt des Inkontaktbringens des alkalischen Zellstoffs mit Sauerstoff (O) vor Inkontaktbringen des alkalischen Zellstoffs mit Ozon (Z) unter alkalischen Bedingungen umfasst.

4. Verfahren nach einem der vorgehenden Ansprüche, wobei die Bleichsequenz einen Schritt des Inkontaktbringens des Zellstoffs mit Chlordioxid (D) nach dem Schritt des Inkontaktbringens des Zellstoffs mit Ozon (Z) unter alkalischen Bedingungen umfasst.

5. Verfahren nach einem der vorgehenden Ansprüche, wobei die Bleichsequenz einen doppelten Schritt des Inkontaktbringens des alkalischen Zellstoffs mit Sauerstoff (OO) vor Inkontaktbringen des Zellstoffs mit Ozon (Z), und einen doppelten Schritt des Inkontaktbringens des Zellstoffs mit Chlordioxid (DD) nach Inkontaktbringen des alkalischen Zellstoffs mit Ozon (Z) umfasst.

6. Verfahren nach einem der vorgehenden Ansprüche, wobei der pH-Wert des erhaltenen Zellstoffs auf einen pH-Wert von 10-13 im Schritt (iv) eingestellt wird.

7. Verfahren nach einem der vorgehenden Ansprüche, wobei die Zellstoffintrinsische Viskosität des erhaltenen Zellstoffs vor dem Schritt (v) zwischen 600-1200 ml/g liegt.

8. Verfahren nach einem der vorgehenden Ansprüche, wobei die Zellstoffintrinsische Viskosität des erhaltenen behandelten Zellstoffs nach der Bleichsequenz in dem Schritt (v) zwischen 200-500 ml/g, vorzugsweise zwischen 250-450 ml/g, liegt.

9. Verfahren nach einem der vorgehenden Ansprüche, wobei das Verfahren die Imprägnierung des vorhydrolysierten Faserquellenmaterials mit Weißlauge bei einer Temperatur umfasst, die um 20-70°C niedriger als die Gartemperatur nach dem Schritt (ii) und vor dem Schritt (iii) ist.

10. Verfahren nach einem der vorgehenden Ansprüche, wobei das Verfahren ferner den folgenden Schritt umfasst:
vi. Auflösen des erhaltenen behandelten Zellstoffs des Schritts (v).

11. Verfahren nach Anspruch 10, wobei die Zellstoffkonsistenz nach dem Auflösen 3,5-6,0 Gew.-%, bezogen auf das Gesamtgewicht der Lösung, beträgt.

12. Behandelter Zellstoff, der durch das Verfahren nach einem der Ansprüche 1-11 erhalten wird.

13. Aus dem behandelten Zellstoff hergestellte Textilfasern nach Anspruch 12.

14. Textilprodukt umfassend Textilfasern nach Anspruch 13.

15. Verwendung des behandelten Zellstoffs nach Anspruch 12 zur Herstellung von Regeneratzellulose.

## Revendications

1. Procédé de production de pâte traitée comprenant les étapes consistant à :
i. fournir un matériau source de fibres ;
ii. soumettre le matériau source de fibres à une pré-hydrolyse ;
iii. soumettre le matériau source de fibres pré-hydrolysé à un procédé de mise en pâte chimique alcaline, de préférence une mise en pâte kraft, pour obtenir une pâte alcaline ;
iv. ajuster éventuellement le pH de la pâte obtenue à un pH supérieur à 9 ;
v. soumettre la pâte alcaline ayant un pH supérieur à 9 à une séquence de blanchiment comprenant la mise en contact de la pâte avec de l'ozone (Z) dans des conditions alcalines pour obtenir une pâte traitée.

2. Procédé selon la revendication 1, dans lequel le procédé comprend en outre une étape de retrait de la liqueur de pré-hydrolysat après l'étape ii).

3. Procédé selon la revendication 1 ou 2, dans lequel la séquence de blanchiment comprend l'étape de mise en contact de la pâte alcaline avec de l'oxygène (O) avant de mettre en contact la pâte alcaline avec de l'ozone (Z) dans des conditions alcalines.

4. Procédé selon l'une quelconque des revendications précédentes, dans lequel la séquence de blanchiment comprend une étape de mise en contact de la pâte avec du dioxyde de chlore (D) après l'étape de mise en contact de la pâte avec de l'ozone (Z) dans des conditions alcalines.

5. Procédé selon l'une quelconque des revendications précédentes, dans lequel la séquence de blanchiment comprend une double étape de mise en contact de la pâte alcaline avec de l'oxygène (OO) avant de mettre la pâte en contact avec de l'ozone (Z), et une double étape de mise en contact de la pâte avec du dioxyde de chlore (DD) après avoir mis la pulpe alcaline en contact avec l'ozone (Z).

6. Procédé selon l'une quelconque des revendications précédentes, dans lequel le pH de la pâte obtenue est ajusté entre pH 10-13 à l'étape (iv).

7. Procédé selon l'une quelconque des revendications précédentes, dans lequel la viscosité intrinsèque de pâte de la pâte obtenue avant l'étape (v) est comprise entre 600-1200 ml / g.

8. Procédé selon l'une quelconque des revendications précédentes, dans lequel la viscosité intrinsèque de pâte de la pâte traitée obtenue après la séquence de blanchiment à l'étape (v) est comprise entre 200-500 ml / g, de préférence entre 250-450 ml / g.

9. Procédé selon l'une quelconque des revendications précédentes, dans lequel le procédé comprend l'imprégnation du matériau source de fibres pré-hydrolysé avec de la liqueur blanche à une température qui est de 20-70°C inférieure à la température de cuisson après l'étape (ii) et avant l'étape (iii).

10. Procédé selon l'une quelconque des revendications précédentes, comprenant en outre l'étape consistant à :
vi. dissoudre la pâte traitée obtenue de l'étape (v).

11. Procédé selon la revendication 10, dans lequel la consistance de la pâte après la dissolution est de 3,5 à 6,0% en poids, sur la base du poids total de la solution.

12. Pâte traitée obtenue par le procédé selon l'une quelconque des revendications 1 à 11.

13. Fibres textiles produites à partir de la pâte traitée selon la revendication 12.

14. Produit textile comprenant des fibres textiles selon la revendication 13.

15. Utilisation de la pâte traitée selon la revendication 12 pour la production de cellulose régénérée.
